# EUROPEAN PATENT APPLICATION

(11) **EP 2 211 279 A2**
(43) Date of publication of application: **28.07.2010**
(21) Application number: 10150671.5
(22) Date of filing: 13.01.2010
(51) Int. Cl.: G06F 17/30, G11B 27/10, G06F 3/048

(54) **Apparatus and method for playing of multimedia item**

(30) Priority: 14.01.2009 KR 20090002914; 12.05.2009 KR 20090041106
(71) Applicant: Samsung Electronics Co., Ltd., Suwon-si, Gyeonggi-do (KR)
(72) Inventor: Han, Myoung Hwan, Gyeonggi-do (KR); Shin, Seung Woo, Gyeonggi-do (KR)
(74) Representative: Boakes, Jason Carrington

(57) **Abstract**

A method, apparatus, and system are described in which an electronic device includes a display means having an output area and an execution area. An electronic device user may simply and intuitively play a multimedia item through manipulation of objects in the output area and the execution area. The multimedia item playing system may includes an output area to display an object corresponding to a multimedia item, and an execution area to receive the object moved from the output area and to play the multimedia item in response to the receiving.

## Description

### BACKGROUND OF THE INVENTION

### FIELD OF THE INVENTION

Exemplary embodiments of the present invention relate to a method and apparatus for simply and intuitively playing a multimedia item using an output area and an execution area of the apparatus.

### DESCRIPTION OF THE BACKGROUND

With the rapid development of communication technologies, more functions and user interfaces (UI) of portable terminals are being developed and provided. When a multimedia item, such as a music file or a video file, is played in a portable terminal, the portable terminal may provide an object corresponding to video information, music source information, and image information corresponding to the multimedia item through a display unit of the portable terminal. Moreover, the portable terminal may indicate that a multimedia item is being played through an object, such as a progress bar or a graphic equalizer, in addition to the object. However, when using a user interface according to a multimedia item provided from the existing portable terminal, the user may need to repeatedly perform input operations to select a desired multimedia item and to control functions while playing the selected multimedia item, which causes inconvenience to the user. Moreover, the existing portable terminal may provide only standardized and limited effects while playing a multimedia item.

### SUMMARY OF THE INVENTION

Exemplary embodiments of the present invention provide a method and apparatus for intuitively and conveniently playing a multimedia item through an intuitive user interface.

Exemplary embodiments of the present invention further provide a method and apparatus for converting a multimedia item into an object and providing the object when the multimedia item is played.

Additional features of the invention will be set forth in the description which follows, and in part will be apparent from the description, or may be learned by practice of the invention.

Exemplary embodiments of the present invention disclose a multimedia item playing system including an output area and an execution area. The output area displays an object associated with a multimedia item. The execution area receives the object moved from the output area and the multimedia item is played in response to the receiving.

Exemplary embodiments of the present invention disclose a portable terminal including an output area, an execution area, and a controller. The output area displays an object associated with a multimedia item. The execution area receives the object moved from the output area and the multimedia item is played in response to the receiving. The controller controls a conversion of a plurality of objects displayed on the output area, controls playback of the object in response to detecting that the object is in the execution area.

Exemplary embodiments of the present invention disclose a method of playing a multimedia item. The method includes displaying an object in an output area in response to a request for playing a multimedia item associated with the object, moving the object from the output area to an execution area, and playing the object in response to moving the object to the execution area.

It is to be understood that both the foregoing general description and the following detailed description are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this specification, illustrate exemplary embodiments of the invention, and together with the description serve to explain the principles of the invention.

FIG. 1A and FIG. 1B are drawings schematically illustrating a portable terminal according to exemplary embodiments of the present invention.

FIG. 2 is a flowchart illustrating a method to play a multimedia item a portable terminal according to exemplary embodiments of the present invention.

FIG. 3, FIG. 4, and FIG. 5 are drawings illustrating examples of screens of the portable terminal according to exemplary embodiments of the present invention.

FIG. 6 is a flowchart illustrating a method to control a disc object playing in a portable terminal according to exemplary embodiments of the present invention.

FIG. 7 is a drawing illustrating an example of a screen of a portable terminal providing a contents list according to exemplary embodiments of the present invention.

FIG. 8A and FIG. 8B illustrate a conversion process for displaying a disc object according to exemplary embodiments of the present invention.

FIG. 9A and FIG. 9B illustrate exemplary screens of the multimedia item playing process according to exemplary embodiments of the present invention.

FIG. 10 is a flowchart illustrating the multimedia item playing method in a portable terminal according to exemplary embodiments of the present invention.

FIG. 11, FIG. 12, and FIG. 13 are drawings illustrating examples of screens of a portable terminal according to exemplary embodiments of the present invention.

FIG. 14 is a block diagram illustrating a configuration of a portable terminal according to exemplary embodiments of the present invention.

### DETAILED DESCRIPTION OF THE ILLUSTRATED EMBODIMENTS

The invention is described more fully hereinafter with reference to the accompanying drawings, in which exemplary embodiments of the invention are shown. This invention may, however, be embodied in many different forms and should not be construed as limited to the exemplary embodiments set forth herein. Rather, these exemplary embodiments are provided so that this disclosure is thorough, and will fully convey the scope of the invention to those skilled in the art. In the drawings, the size and relative sizes of layers and regions may be exaggerated for clarity. Like reference numerals in the drawings denote like elements.

A multimedia item may include a music file, an album file including several music files as one group, and an item related with a playing of a multimedia file such as a video file. A media object may represent a media case or a disk-shaped object having media content. A disk object may represents a disk shaped object having media content.

An object provided to an output area can be provided as a case-shaped object or can be provided as a disk-shaped object, depending on a setting. Hereinafter, a case-shaped object or a disk-shaped object provided to an output area may be referred to as a media object. A media object and a disk object can be converted using additional information (e.g., image information) of a music file or video file, or can be converted using additional information (e.g., image information) of an album file. The converted media object or disk object can then be displayed.

Playing a disk object may include playing a multimedia item corresponding to a disk object or playing contents in a group (e.g., an album file) of multimedia items.

When a disk object positioned in an execution area is an object corresponding to a multimedia item, if playback of the multimedia item is complete, the playback may be repeated or the next multimedia item (e.g., a music file or an album file) may be played, depending on a setting of the electronic device. When a disk object is an object associated with a multimedia item of a specific group (e.g., an album file), if playback of a content within the group is complete, the next content within the group may be played. If all contents within the group have been played, playback of the contents may be repeated or the next multimedia item (e.g., a music file or an album file) of a corresponding group may be played.

When the disk object is an object corresponding to a group multimedia item, only the contents which belong to the group multimedia item can be played according to a setting of the electronic device. When the contents within a group multimedia item have been played according to the setting, playback of the group multimedia item can be terminated or the playback of the contents within the group multimedia item can be sequentially repeated.

A case-shaped or disk-shaped object having media content may be provided using image information within a multimedia item and/or image information provided by the electronic device. For example, a disk-shaped or case-shaped object may be visually provided. When a multimedia item is played, a visual effect of the disk object being rotated may be displayed in an execution area.

As described above, the electronic device of the present invention classifies a display area into an output area and an execution area, and the electronic device is controlled by interaction between the classified areas. Hereinafter, in the embodiment of the present invention, it is exemplified that the electronic device is a portable terminal. However, the method, apparatus and system of the present invention is not limited to the case where the portable terminal is used, but can be applied to any electronic device including all types of input means and display means which can be inputted and outputted by user according to the following embodiments. For example, the electronic device of the present invention can include a portable communication terminal, a personal digital assistant (PDA), a portable game terminal, a portable terminal such as a digital broadcasting player and a smart phone, and a display device such as a television (TV), a large format display (LFD), a digital signage (DS), and a media pole. That is, the electronic device may include all information communication devices, multimedia devices and their application devices. Moreover, the input means includes a touch pad, a touch screen, a motion sensor, a voice recognition sensor, a remote controller and a pointer.

Exemplary embodiments of the present invention can be applied to all types of electronic devices including the portable terminal and display devices. Hereinafter, a portable terminal including an output area and an execution area according to exemplary embodiments of the present invention is described with reference to accompanying drawings.

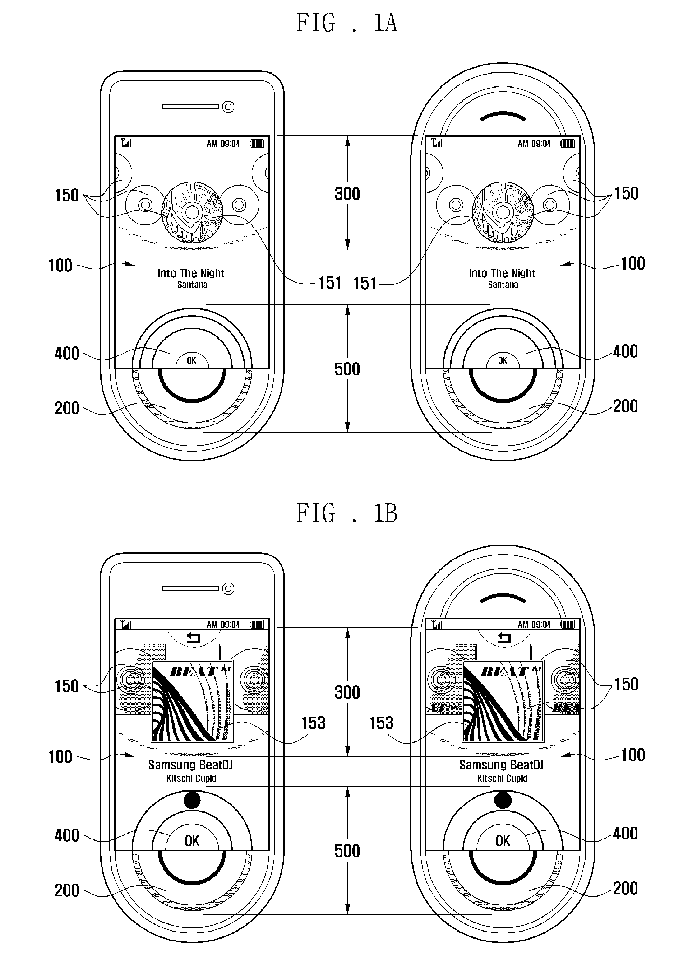

FIG. 1A and FIG. 1B are drawings schematically illustrating a portable terminal according to exemplary embodiments of the present invention.

Referring to FIG. 1A and FIG. 1B, the portable terminal may include a display means 100 including an output area 300 for displaying various kinds of objects corresponding to one or more multimedia items, and an execution area 400 for controlling a visual effect display of a disc object selected in the output area 300 and for controlling an execution of a multimedia item associated with the selected disk object. The portable terminal may further include an input means 200 for inputting function control of the portable terminal.

If the portable terminal is implemented as a full touch-screen type, the input means 200 can be omitted. Further, if the display means 100 is configured as a touch-screen, the input means 200 may include a touch pad, and functions of the portable terminal may be controlled by the touch screen and the touch pad. In some cases, the portable terminal may not include the touch screen and the touch pad, and may implement the display means 100 as a liquid crystal display (LCD). The input means 100 can include a normal keypad or a combination of the keypad and the touch pad.

The portable terminal may display a case-shaped object (150 of FIG. 1 b) and/or a disc-shaped object (150 of FIG. 1 a), which may be converted using additional information of the multimedia item through the output area 300., and a portable terminal user may navigate between the objects 150 displayed in the output area 300. As shown in FIG. 1A (reference numeral 151), the objects 150 can be provided as an object having a real disc-shape in an off-line mode, or can be provided, as shown in FIG. 1B (reference numeral 153), as an object having a case-shape in an off-line mode. A media object can represent a disc-shaped object, or a case-shaped object including a disc-shaped object. A plurality of the objects 150 can be provided in the output area 300. A media object may be selected, activated, and differently displayed among the plurality of objects 150. The selected media object can be enlarged, emphasized, or highlighted, and then displayed to differentiate the selected media object from other objects 150. Navigation between multimedia items can be performed using navigation controls.

Moreover, the portable terminal may control playback of a media object selected by the user through the execution area 400. For example, playback of the multimedia item corresponding to a disc object may be performed when the disc object is positioned in the execution area 400.

If the media object is a case-shaped object, the disc object may secede from the media object according to a sliding method, and the seceded disc object may be moved and positioned in the execution area 400. When the media object is provided as a disc object having a disc-shape, the disc object may be moved and positioned in the execution area 400.

The execution area 400 may display a graphic user interface (GUI) relating to a disc object and a GUI for controlling functions (e.g., the multimedia item play function) of the portable terminal. The GUI related to the disc object may be displayed with a visual effect. Additionally, the display means 100 may be configured with a touch screen and a touch pad can be configured in the lower portion of the touch screen. The combination structure of the execution area 400 and the touch pad 200 can be used as a control means 500 for controlling various supplementary features of the portable terminal.

The touch pad 200 may receive and process a user input according to an interaction between the user and the portable terminal. The touch pad 200 can control an operation of the portable terminal in connection with the execution area 400.

The control means 500 may include the execution area 400, which may be a GUI area, and a touch pad 200, which may be a physical user interface (PUI) area. The execution area 400 and the touch pad 200 may be connected adjacently. The touch pad 200 may be arranged adjacent to the upper portion of the display means 100. If the display means 100 includes a touch screen, the output area 300 can be used for various user inputs, as well as for displaying the media object may be converted into a case-shape or disc-shape object by using image information of the multimedia item. Further, the execution area 400 can be used for various user inputs, as well as for the display of GUI having various shapes corresponding to the execution application and of the visual effect display of a specific disc object. For example, the output area 300 may be an area for outputting the multimedia item as the media object. The user may input an input event by using the output area 300, thereby being able to intuitively control the movement of the disc object for switching between the media objects and for playback of a multimedia item.

The execution area 400 may represent an area which commands playback of a multimedia item associated with a disc object, when the disc object is moved and positioned according to a user input in the output area 300. The execution area 400 can display related GUI for controlling the playback of the multimedia item and can receive the user input event through the above-described GUI. The GUI can be provided as a virtual item, which is adaptively changed corresponding to the execution application of the portable terminal. For example, by generating an input event to the GUI, the user can perform navigation control between media objects of the output area 300, and function control relating to the playback of the multimedia item.

As described above, a media object can be converted into a case/disk shape and be displayed by using image information provided by a multimedia item. The portable terminal user may select a disc object from among various disc objects, and can play the multimedia item by moving the selected disc object to a specific area (i.e., execution area 400). The type of the portable terminal may not be limited to the above-described exemplary embodiments, but may include all types of portable terminals in which the display means 100 is divided in an output area 300 and an execution area 400. Additionally, the portable terminal may include all types of portable terminals which include an input means for controlling user navigation of a disk object displayed in the output area 300.

Hereinafter, exemplary embodiments in which the disc-shaped media object is provided to the output area 300 are described. The media object can correspond to a disc object. For example, the media object and the disc object may be same object. Accordingly, hereinafter, the media object provided to the output area 300 may be referred to as a disc object.

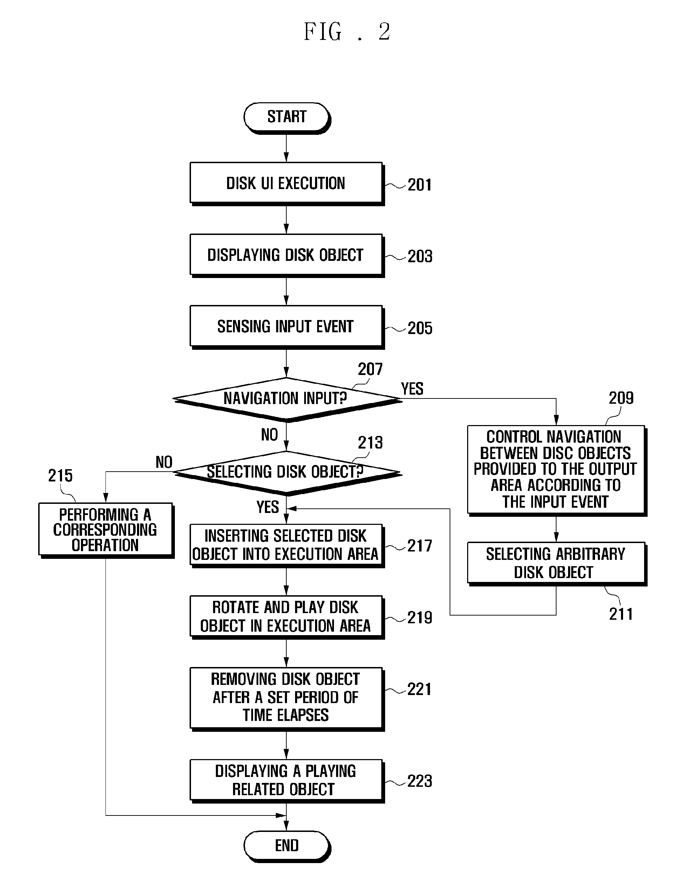

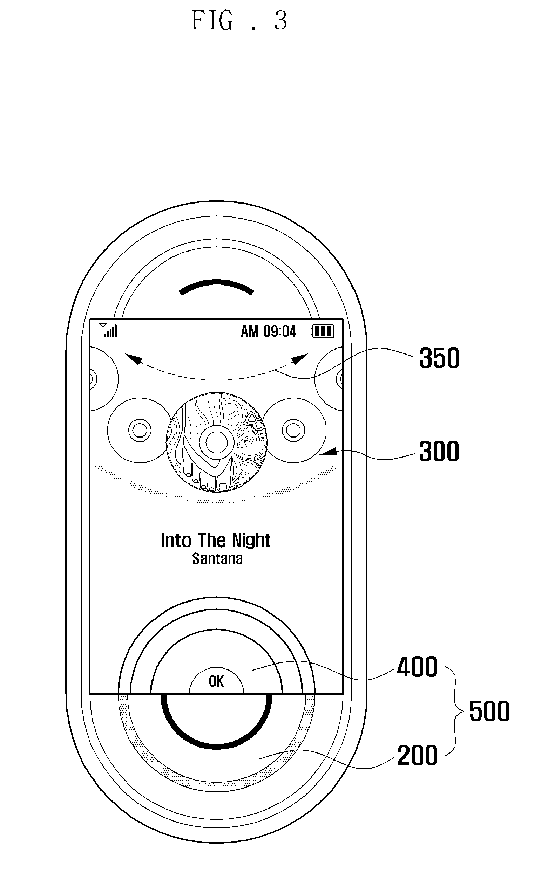

FIG. 2 is a flowchart illustrating a method to play a multimedia item in a portable terminal according to exemplary embodiments of the present invention. FIG. 3, FIG. 4, and FIG. 5 are drawings illustrating examples of screens of the portable terminal according to exemplary embodiments of the present invention.

Referring to FIG. 2, the portable terminal may execute a disc user interface (Disc UI) in response to a user's request (201), and, accordingly, can display various screen data (203). The disc user interface can display a corresponding object to each area in the display means 100, which is divided into the output area 300 and the execution area 400. As shown in FIG. 1A, the screen may be divided into the output area 300 and the execution area 400. At least one disc object may be displayed through the output area 300, and the GUI for controlling functions of the disc object can be displayed.

The portable terminal can sense a user input (e.g., input event) after performing step 203 (205). The input event can be generated in at least one of the touch screen and the touch pad of the portable terminal, and particularly, in the output area 300 while the portable terminal senses the input event.

The input event may be user generated in the output area 300. The input event may represent various types of touch inputs, including a tap event, a sweep event, a flick event, and a drag & drop event. The portable terminal can sense one input event from among the above-described various events in the output area 300. Then, if the portable terminal senses the input event at the output area 300, the portable terminal may determine the type of input event (207, 213). For example, the portable terminal may determine whether the input event is an input event for the navigation control of the disc object (207), or whether the input event is an input event for the selection and execution of a disc object (213).

If the input event is an input event for the navigation control, the portable terminal may control navigation between disc objects provided to the output area 300 according to the input event (209). For example, the portable terminal may convert the disc object, which is activated through the output area 300 according to the navigation control of the user, and display it. As shown in the example screen (reference numeral 350) of FIG. 3, the input event can be sweep event or flick event generated by the user on the output area 300. The navigation is controlled corresponding to an input direction of the sweep event or the flick event.

The input event for the navigation of the disc object can be inputted by using the control means 500 including the execution area 400 and the touch pad 200, by using the touch pad 200, or by using a general keypad combination (the numeric key, the navigation key, and the function key). If a disc object is selected by the user in step 209 (211), the portable terminal can move the disc object which is being activated according to the selection (e.g., input event) from the output area 300 to the execution area 400 (217).

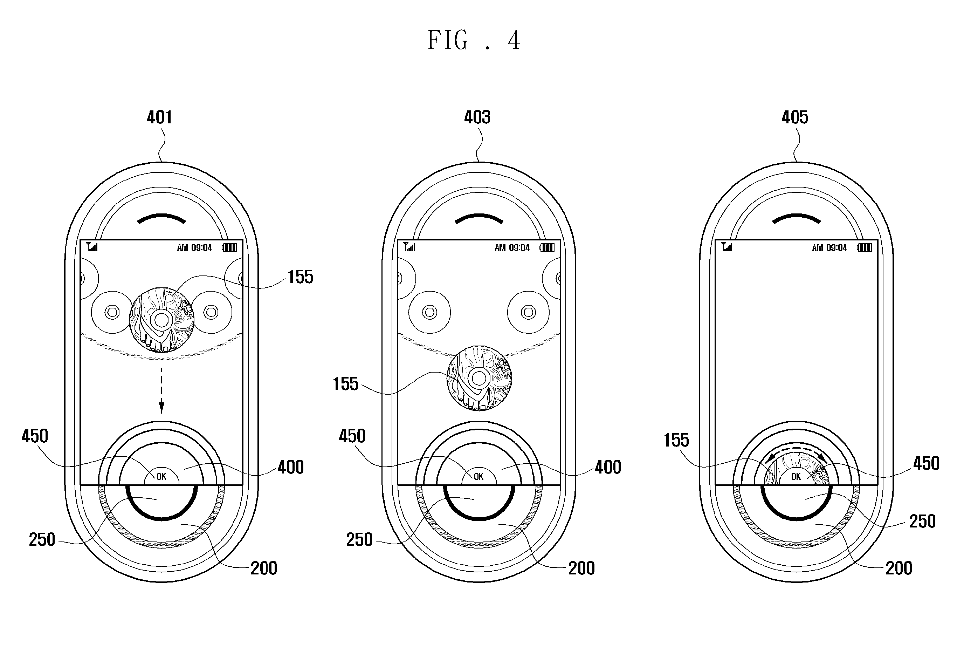

The selection and movement of the disc object can be performed by the user through an input event such as a drag and drop event or flick event. Referring to FIG. 4, the user can perform the selection and movement of the disc object using the virtual item 450 among GUI provided in the execution area 400 according to the selection/check function. The user can perform the selection and movement of the disc object by using a function key in the general input means (e.g., touch pad, keypad) according to the selection/check function. In FIG. 4, the user directly controls the selection and movement of the disc object using a drag and drop event.

Referring to FIG. 4, as shown in reference numerals 401 and 403, the user can touch the disc object 155 in the output area 300, and can generate a drag input by dragging the activated disc object 155 to the execution area 400.

The portable terminal may provide a visual effect illustrating that the disc object 155 is moved from the output area 300 to the execution area 400 in response to the drag input of the user. Then, as shown in reference numeral 405, the user can generate a drop input for the disc object 155 in the location of the execution area 400. The portable terminal may provide a visual effect illustrating that the disc object 155 is inserted into the execution area 400 in response to the drop input of the user. Referring back to FIG. 2, if the portable terminal senses that a specific disc object is moved and inserted into the execution area 400, the disc object of the execution area 400 may be rotated and the multimedia item corresponding to the disc object may be played (219).

When the disc object is positioned in the execution area 400, the portable terminal may provide a visual effect such that a disc object appears to rotate within the execution area 400, as indicated by screen 405 of FIG. 4. The portable terminal may play the multimedia item corresponding to the disc object in the execution area 400 while providing the rotating visual effect. The multimedia item corresponding to the disc object in the execution area 400 can be played with respect to one multimedia item (e.g., music file) or with respect to the multimedia item within a group (e.g., one music file within album file) according to the disc object. The portable terminal can provide the rotating visual affect for the disc object for a set period of time within the execution area 400. The portable terminal may also remove the disc object from the execution area 400 after the set period of time elapses (221).

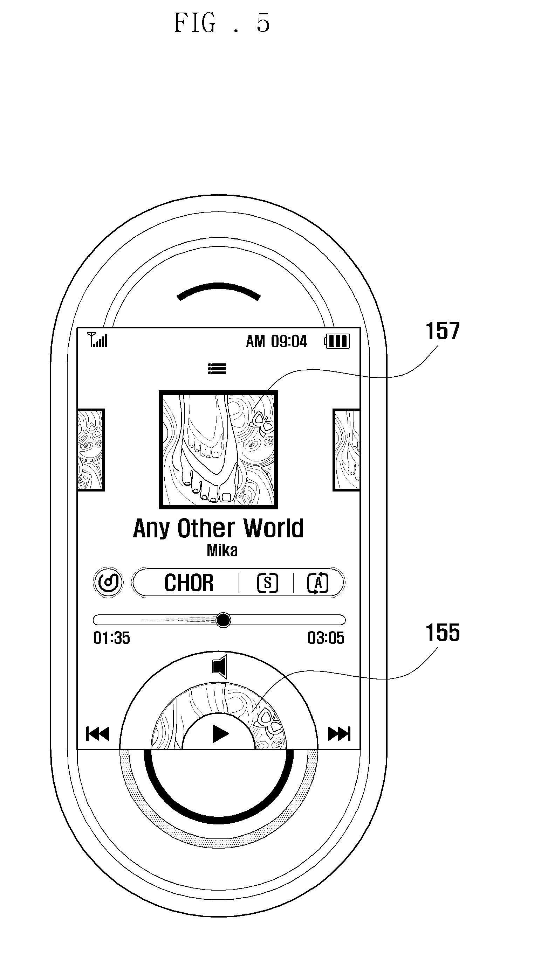

The portable terminal can provide a visual effect that the disc object disappears after rotating for a set period of time within the execution area 400. In some cases, step 221 can be omitted and a visual effect may be provided that shows the disc object continually rotating during playback of the multimedia item corresponding to the disc object. After step 219 and 221, the portable terminal may display a user interface related to playing the multimedia item playing (223). For example, the portable terminal can display at least one object related to playback of the multimedia item. An example of such a screen is shown in FIG. 5.

Referring to FIG. 5, an additional object related to playing the multimedia item such as, for example, a playing progress bar, a function control item, and additional information (e.g., lyrics, song name, and image information) of the multimedia item which is being played may be displayed. A playing progress bar may indicate a status or progress of the multimedia item which is being played. A function control item may include items (e.g., |◄, ∥, ►, ►|) for controlling the playback of the multimedia item.

The portable terminal can provide basic image information 157 associated with the multimedia item. Additionally, the GUI of the execution area 400 may be replaced with the function control items related to the playback of the multimedia item and subsequently displayed. The disc object 155 within the execution area 400 can be displayed with a visual effect showing the disc object 155 as continually rotating according to a setting, or can be provided as an empty space in which a corresponding disc object is not shown.

Referring back to FIG. 2, when the input event sensed at step 205 of FIG. 2 is not an input event for the navigation control of a disc object or an input event for the selection and execution of the disc object, the portable terminal can perform a corresponding operation according to the user input event (215). For example, when an input event for execution of a function associated with the selected disc object in the output area 300 is generated, the portable terminal can perform the control function in response to the input event. An operation corresponding to the control function can be performed. Examples of the operation include playing of the music file/album file corresponding to the disc object, or displaying additional information (e.g., music file list) of the music file/album file corresponding to the disc object, or executing a specific application linked to the disc object.

Although not discussed in the description of FIG. 2, FIG. 3, FIG. 4, and FIG. 5, a contents list associated with the disc object can be displayed when the disc object is moved to the execution area 400. Hereinafter, an operation of controlling the playback of a new multimedia item and navigation of a disc object during playback of a disc object is described.

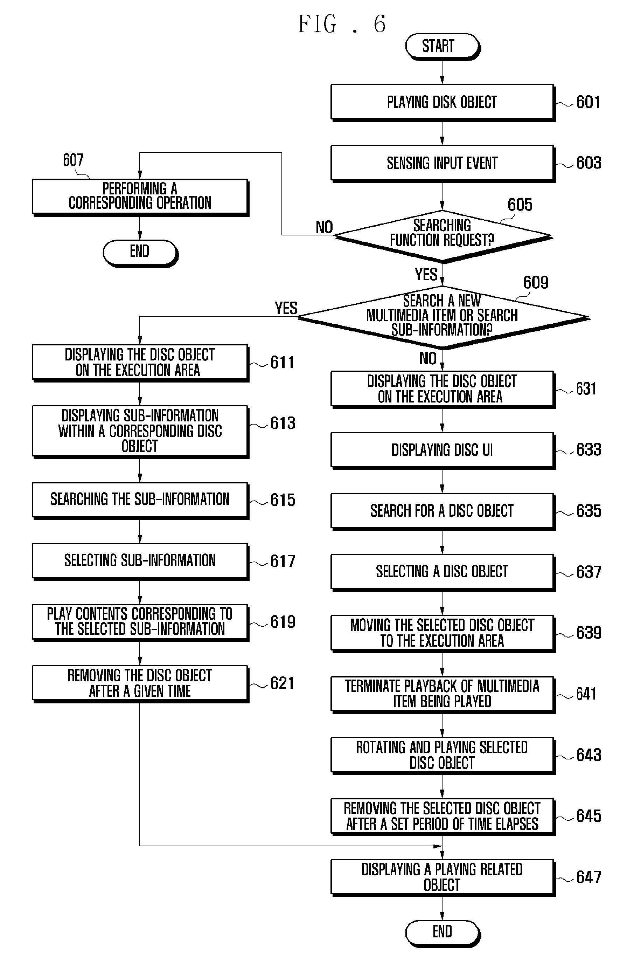

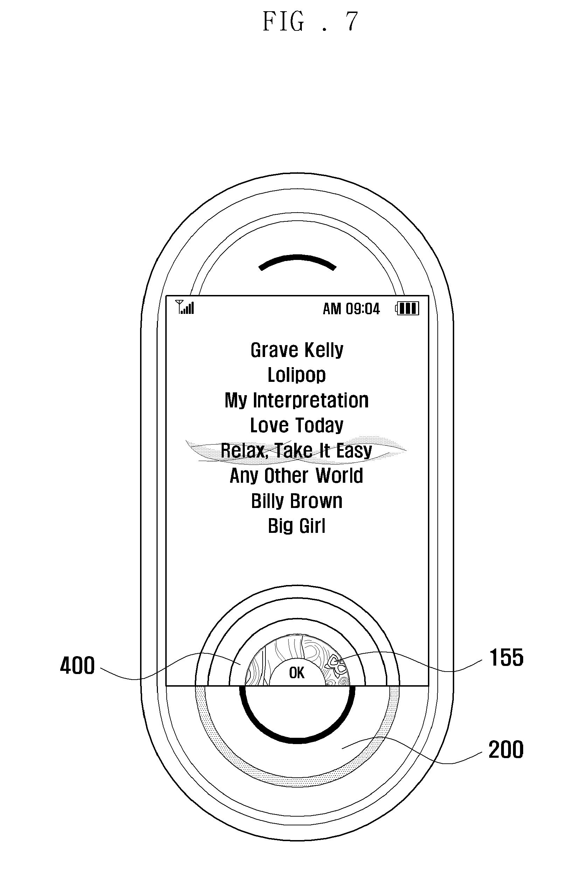

FIG. 6 is a flowchart illustrating a method to control a disc object playing in a portable terminal according to exemplary embodiments of the present invention. FIG. 7 is a drawing illustrating an example of a screen displaying a contents list according to exemplary embodiments of the present invention.

Referring to FIG. 6, when the portable terminal plays a multimedia item associated with a disc object in response to the user's request (601), the portable terminal can sense a user input (e.g., input event) (603). The input event can be generated in the touch screen or the touch pad of the portable terminal. The input event may be a touch input of various types. The input event can be a tap event requesting a function through a soft key provided on the touch screen, or can be another type of input requesting a function using a soft key or a hot key provided on the touch pad. The input event may also include an input requesting a function through a function key provided by the portable terminal (e.g. on the side or an input means of a portable terminal). Functions of the portable terminal may include entering a menu to search for information (e.g. music file) within the disc object. In FIG. 6, a search function is described. If the portable terminal senses the input event, the portable terminal may determine whether the input event corresponds to a search function request (605). The search function can include the navigation function to search and select a multimedia item to be played. If the input event does not correspond to the search function request, the portable terminal can perform an operation corresponding to the input event (607). For example, if the input event is an input by continuous contact through the execution area 400 and the touch pad 200, the portable terminal can perform an operation of adding and subtracting a value associated with the playback of a multimedia item being played.

The operation of adding and subtracting a value can include, for example, controlling a playback volume according to the user's input on the execution area 400 and/or the touch pad 200.

If the input event is a search function request, the portable terminal may determine whether the search function request is a request for a new multimedia item search, or whether the input event is a request for searching sub-information within the multimedia item which is being played on the portable terminal (609). Examples of sub-information include, for example, a plurality of contents (e.g. music file) belonging to a disc object of an album file type.

If the search function request is a request for sub-information search, the portable terminal may display, in the execution area 400, a disc object corresponding to the multimedia item being played (611), and may display the sub-information within the disc object (613). For example, the portable terminal can display the disc object corresponding to the multimedia item in the execution area 400, and can display the contents list configuring the multimedia item. An example of such a screen is shown in FIG. 7. Referring to FIG. 7, the portable terminal may display a contents list (e.g., a list listing music files in an album file) of a group multimedia item (e.g. album file) which is playing in response to the user's request. Additionally, as described above, the portable terminal may display the disc object 155 corresponding to the multimedia item being played, and can provide a rotating visual effect with respect to the disc object 155.

Referring to FIG. 6 again, the portable terminal may perform the searching operation within the sub-information in response to the user input (615). For example, the portable terminal may perform navigation between items within the contents list according to a request of the user. When a sub-information is selected (617), the portable terminal may terminate playback of contents of the multimedia item being played, and may play contents corresponding to the selected sub-information (619). The portable terminal may then remove the disc object rotating in the execution area 400 after a preset period of time of playing the contents corresponding to the selected sub-information (621). The portable terminal can then provide a visual effect that the disk object is removed (i.e., disappear) from the execution area 400 after having rotated within the execution area 400 for the set period of time. The portable terminal may display a playing-related object when the disk object is removed (647).

Referring back to step 609, if the search function request is not a search request for sub-information and is, for example, a request for a disc object search or a request for a new multimedia item search, the portable terminal may display the disc object associated with the multimedia item being played on the execution area 400 (631). Additionally, a plurality of disc objects may be displayed in the output area 300 through a disc user interface (Disc UI) having a form illustrated in FIG. 1, FIG. 3, FIG. 4, and FIG. 5 (633).

The portable terminal may perform a search for a disc object in response to a user input (635). For instance, the portable terminal may perform navigation between a plurality of disc objects provided to the output area 300. When a disc object is selected (637), the portable terminal may move the selected disc object to the execution area 400 (639). For instance, the portable terminal may display a visual effect such that a selected disc object of the output area 300 is moved to the execution area 400 and positioned in response to a selection input (e.g., virtual item 450 input such as 'OK' or any suitable confirmation indicator) or a drag and drop input. When the selected disc object is positioned in the execution area 400, the portable terminal may terminate playback of the multimedia item being played (641), and may play the selected disc object moved to the execution area 400 (643). The selected disc object may appear to rotate when moved to the execution area 400. After a set period of time elapses, the portable terminal may remove the selected disc object from the execution area 400 (645), and may display a playing-related object when the disc object is removed (647). As described above, a disc object positioned in the execution area 400 may rotate and then be removed from the execution area 400 after a set period of time elapses. In some cases, the disc object may continuously rotate in the execution area 400 when a multimedia item corresponding to the disc object is being played.

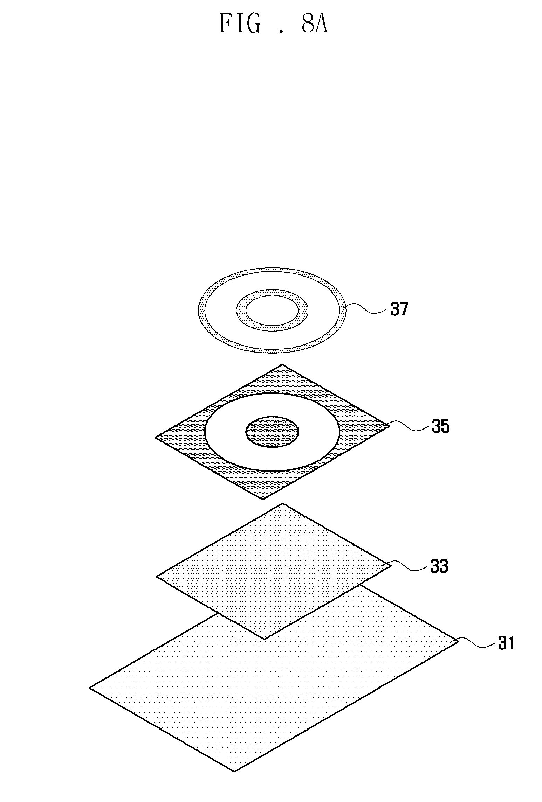

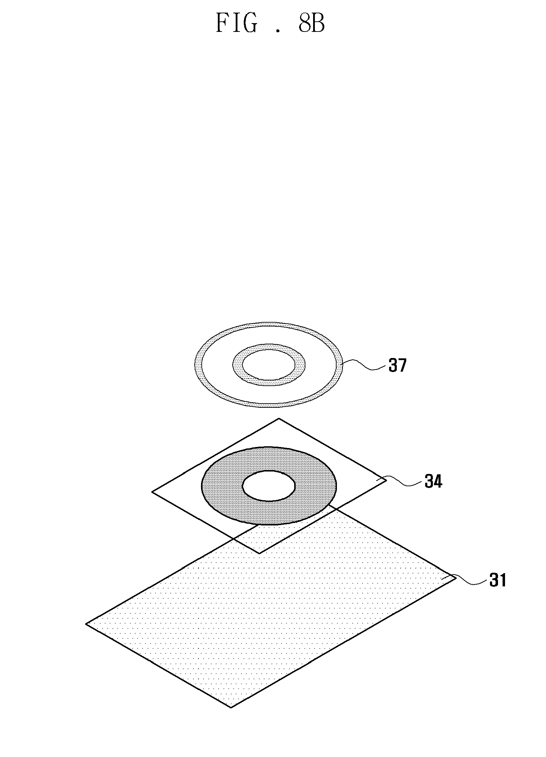

Hereinafter, an operation to display a disc object by using image information corresponding to a multimedia item or image information provided in the portable terminal in connection with the multimedia item is illustrated with reference to FIG. 8A and FIG. 8B.

FIG. 8A and FIG. 8B illustrate a conversion process for displaying a disc object according to exemplary embodiments of the present invention.

Referring to FIG. 8A, a disc object can be displayed after conversion, by using background image 31 corresponding to the Disc UI, image information 33 of a corresponding multimedia item, masking image 35 of graphics corresponding to the background image 31, and detail image information 37 corresponding to a transparent outer ring of a disc. The disc object can be converted using a software algorithm which uses masking image 35 having the same graphics as the background image 31 in which a disk-shaped empty space is formed on the image information 33.

Referring to FIG. 8B, a disc object can be displayed after conversion, by using background image 31 corresponding to the Disc UI, image information 34 of a masked multimedia item, and detail image information 37 corresponding to a transparent outer ring of a disc. Using a software algorithm, the portable terminal can convert the image information 34 of the multimedia item into the disc object by making portions of the image information 34 transparent except a disc shape in the image information 34.

When the Disc UI is provided in response to a user's request, the portable terminal may extract at least one multimedia item within a category corresponding to the user's request. The portable terminal may then obtain image information for the extracted multimedia item(s). The image information provided from the portable terminal can be mapped to the multimedia item(s) which may not include image information. A plurality of disc objects corresponding to respective multimedia items may be displayed after conversion using image information.

Based on FIG. 1 to FIG. 8, playback of the multimedia item(s) using the displayed disc object can be summarized as follows. First, a disc-shaped disc object can be converted using image information extracted from one or more multimedia items corresponding to the disc object. The converted disc objects may be displayed in the output area with an organic structure. A disc object may be selected by the user and moved to the execution area. Subsequently, a multimedia item associated with the disc object in the execution area may be played. The disc object may represent an object which is provided after corresponding image information is converted into a compact disk (CD)-like shape using the image information of the multimedia item or the image information provided by the portable terminal.

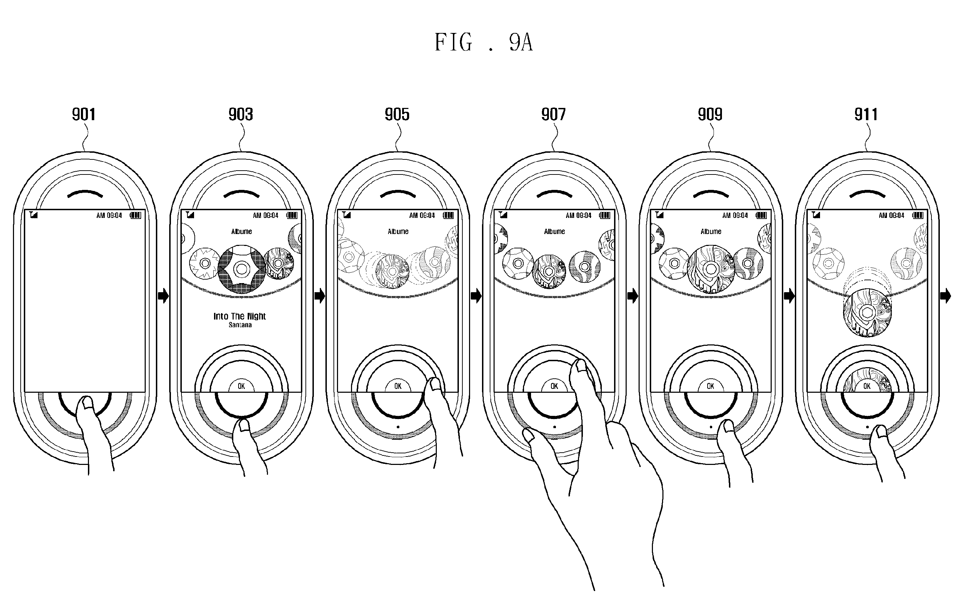

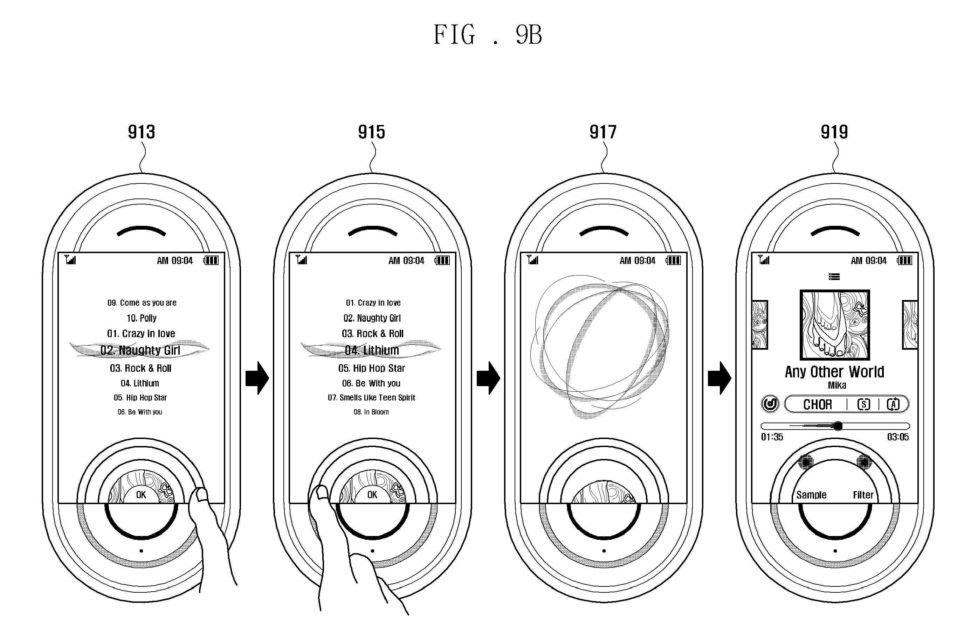

The operation of selecting and playing a disc object is illustrated with reference to FIG. 9A and FIG. 9B.

FIG. 9A and FIG. 9B illustrate exemplary screens of a multimedia item playing process according to exemplary embodiments of the present invention.

Referring to FIG. 9A and FIG. 9B, a portable terminal in the standby state (reference numeral 901) can execute and display (reference numeral 903) a Disc UI in response to a user's request. The portable terminal may display at least one disc object to the output area 300 by using image information of multimedia items within the category requested by the user, and may display the GUI set in the execution area 400. The portable terminal can convert a plurality of the disc objects, as described above, in the output area 300 in response to user input (e.g., an input event). The user may navigate through the plurality of disc objects in the output area 300.

A user may provide an input or may generate an input event by successive contact through the execution area 400 and the touch pad 200. For example, in FIG. 9A and FIG. 9B, the user may navigate through the plurality of disc objects by using the control means 500. The portable terminal can process the navigation through the disc objects according to the control input direction. As shown in FIG. 9A (reference numerals 905, 907, and 909), a user may navigate and select a disc object to play. The user can then move the selected disc object from the output area 300 to the execution area 400 as shown in FIG. 9A (reference numerals 909 and 911).

The selection and movement of the disk object can be directly controlled by the user, by generating a control to select a virtual item corresponding to the confirmation/selection input provided in the execution area 400 or the touch pad 200, and/or by generating an input to a tap point corresponding to a direction of the touch pad 200 as shown in FIG. 9A (reference numerals 909 and 911).

If a disc object is positioned in the execution area 400, as shown in FIG. 9B (reference numeral 913), the portable terminal may display a contents list associated with the disc object. For example, the portable terminal may provide a contents list included in the multimedia item corresponding to the disc object. The contents list can be, for instance, a list including information (e.g., title of song) for a plurality of music files configuring an album file.

Next, as shown in FIG. 9B (reference numerals 913 and 915), a search for a specific content in the contents list can be performed. A desired content can be searched by navigating through one or more items of the contents list. When the desired content is selected, as shown in FIG. 9B (reference numeral 915), a corresponding contents item can be played according to the user's input. User input to play a content item can include generating a tap event on the selected contents item, generating a tap event on a virtual item in the execution area 400 to commands playback of the contents item, generating a tap event on a virtual item in the touch pad 200 to command playback of the contents item, or by generating a key input in a keypad (not shown) to command playback of the contents item. The portable terminal can continuously display the selected disc object in the execution area 400.

Next, the portable terminal can rotate the disc object in the execution area 400, as shown in FIG. 9B (reference numeral 917), in response to the playback command for a item selected in the contents list. That is, a multimedia item corresponding to the contents item can be played. The portable terminal may provide a visual effect corresponding to rotation of the disc object for a set period of time (reference numeral 917 in FIG. 9B) during playback of the contents item. After the set period of time elapses, the rotating visual effect may gradually disappear. Additionally, the portable terminal can provide a visual effect through a display means indicating that a multimedia item is playing instead of the contents list when the disc object rotates as shown in FIG. 9B (the reference numeral 917).

The portable terminal can display objects related to playback of a multimedia item, as shown in FIG. 9B (reference numeral 919), when the disc object is no longer rotating and is removed from the execution area 400. The portable terminal may replace the GUI of the execution area 400 with the objects relating to multimedia item playback and may displays function control items related to playback of the multimedia item (e.g., |◄, ∥, ►, ►|). Additional information, such as, for example, lyrics, artist name, song name, and image information associated with the multimedia item being played and additional objects (e.g., a playing progress bar) related to the playback of the multimedia item may be displayed.

In some cases, a disc-shaped disc object may not be provided to the output area 300; however a case-shaped media object may be provided to the output area 300 according to exemplary embodiments of the present invention. The media object may be different than the disc object. For example, the media object and the disc object may be different object. Accordingly, hereinafter, an object provided in the output area 300 with a case shape may be referred to as a media object, and the disc-shaped object broken away from the media object, using a sliding-type method, and positioned in the execution area 400 may be referred to as a disc object.

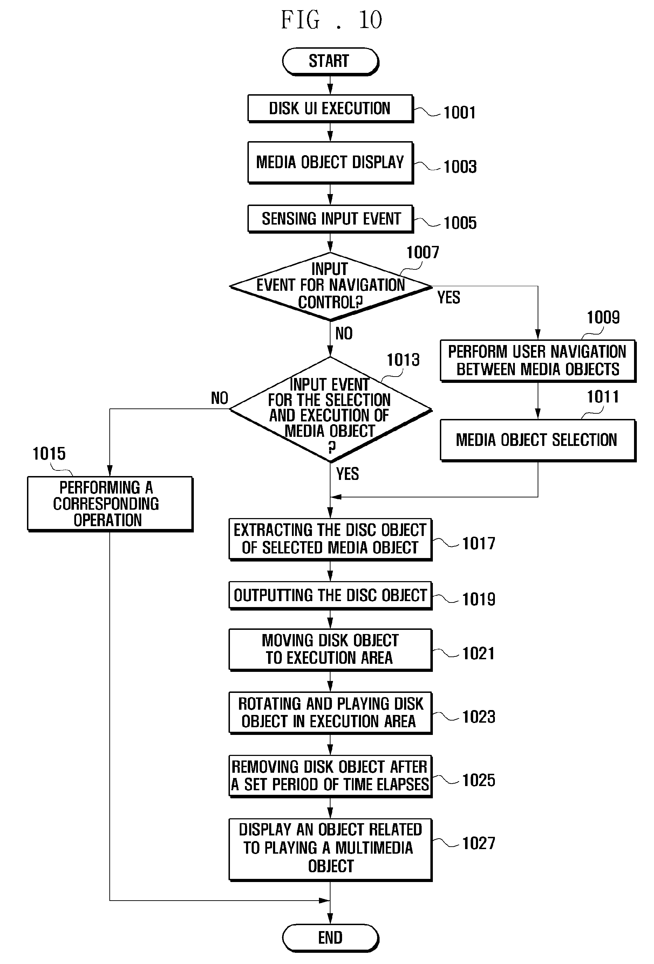

Further exemplary embodiments of the present invention are described with reference to FIG. 10 to FIG. 13. Detailed descriptions of elements and operations similar to the ones described with reference to FIG. 1 to FIG. 9B may be omitted.

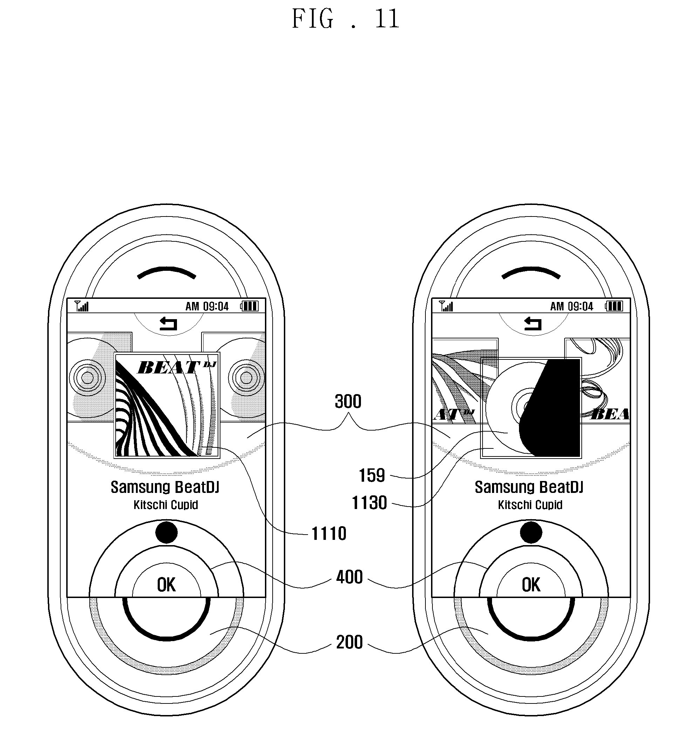

FIG. 10 is a flowchart illustrating a multimedia item playing method in a portable terminal according to exemplary embodiments of the present invention. FIG. 11, FIG. 12, and FIG. 13 illustrate examples of screens of the portable terminal according to exemplary embodiments of the present invention.

Referring to FIG. 10, the portable terminal may execute and display the Disc UI in response to a user's request (1001). A media object may then be displayed (1003). The Disc UI may be similar to the user interface described with reference to FIG. 1 and the display means 100 may be divided into the output area 300 and the execution area 400. The media object having a case-shape can be provided to the output area 300. An example is shown in FIG. 11.

Referring to FIG. 11, a media object having a case shape is displayed. In some cases, the case shape of the media object may reflect additional information that a multimedia item includes (FIG. 11, reference numeral 1110). In some cases, the case shape does not reflect the additional information. In some cases, the media object may have a transparent case shape which may indicate that the multimedia item does not include additional information (FIG. 11, reference numeral 1130).

When the case shape of a media object reflects additional information (FIG. 11, reference numeral 1110), a visual effect may be used to indicate that case cover reflects image information of the multimedia item.

If a media object has a case cover reflecting image information, a disc object may appear from within the media object and may be moved. For example, the disc object having a disc-shape in the media object may be taken from the media object and moved to the execution area 400. When the case shape does not reflect additional information, image information may not exist in the multimedia item but a disc object having a disc-shape may be displayed in a transparent case having no cover. By utilizing image information provided from the portable terminal, the image information may be reflected to the disc object, so that a visual effect distinguished from the media object can be provided.

When the media object has a transparent case, a visual effect that a disc object is included in the media object is provided. Further, a visual effect that the disc object is moved in the direction of the execution area 400 can be provided. For instance, the disc object within the media object may be taken out and moved to the execution area 400. A visual effect that only the media object having a transparent case is displayed in the output area 300 may also be provided.

The screen may be divided into the output area 300 and the execution area 400, as shown in FIG. 1. At least one media object may be displayed in the output area 300, and the GUI having a virtual item for function control can be displayed in the execution area 400. The GUI may correspond to the Disc UI.

After displaying the media object in step 1003, the portable terminal can detect the user input (e.g., input event) (1005). The control input can be generated in the touch screen and/or the touch pad of the portable terminal. The input event may be generated in the touch screen, particularly, in the output area 300. The input event may include various types of touch input, such as, for example, a tap event, a sweep event, a flick event, and a drag and drop event. The portable terminal can sense one or more input events in the output area 300.

If the portable terminal detects the input event in the output area 300, the portable terminal may determine the type of input event detected. For example, the portable terminal may determine whether the input event is an input event for navigation control of a media object (1007), or whether the input event is an input event for the selection and execution of a media object (1013). If the input event is an input event input for navigation control, the portable terminal may perform user navigation between the media objects displayed in the output area 300 according to the input event (1009).

The portable terminal may convert the media object selected by the user from among a plurality of media objects and may display the converted media object. The input event can be a sweep event or a flick event generated by the user on the output area 300. The user navigation is determined according to the input direction of the sweep event or the flick event. The input event for user navigation of a disc object can be input by using control means 500 configured in the execution area 400 and the touch pad 200, can be input using the touch pad 200, or can be input using a general keypad combination (e.g., numeric key, navigation key, and function key).

If a media object is selected by user after the navigation (1011), the portable terminal can perform a corresponding operation (1017). The media object selection can include selection and movement of the selected media object to the execution area 400 after the touch on the selected media object. If the input event is an input event for the selection of a media object, the portable terminal may extract a disc object of the selected media object (1017). The portable terminal may output the extracted disc object from the media object (1019). The portable terminal may separate the outputted disc object from the media object, and move the separated disc object to the execution area 400 (1021).

For example, the user can perform the selection of the media object, the output and movement of a disc object within the media object through an input event such as a drag and drop event, a flick event, or a tap event on a virtual item corresponding to the selection/confirmation function in the GUI provided in the execution area 400.

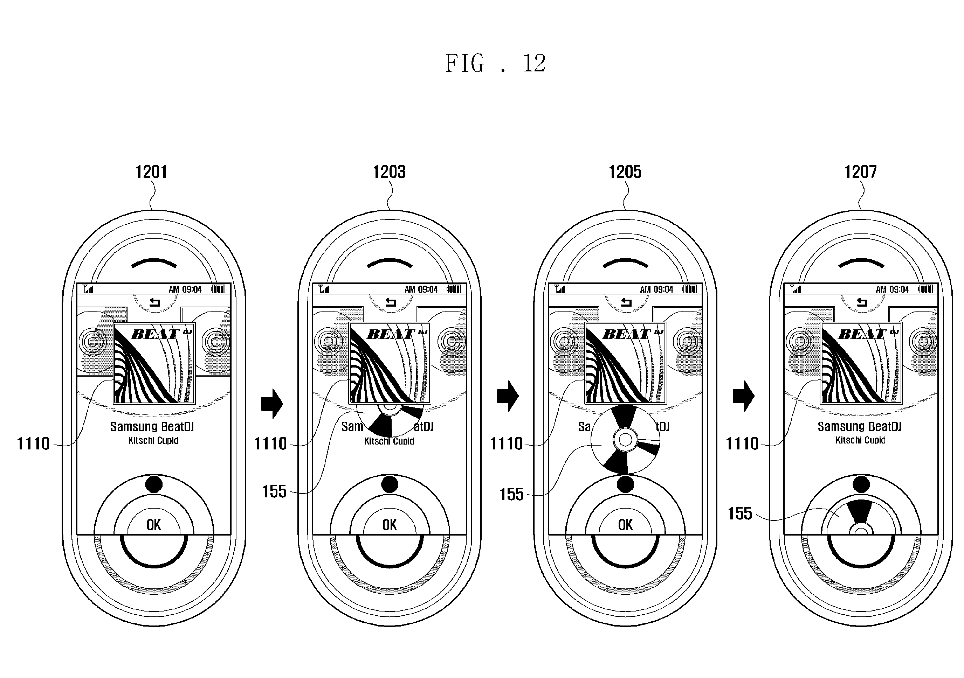

FIG. 12 shows an example of a portable terminal screen having a multimedia item with image information. Accordingly, the case shape in which the image information is reflected to the media object 1110 can be obtained. In FIG. 12, the image information may be reflected in both the media object 1110 and the disc object 155. The user can generate an input event to select the media object 1110 in the output area 300 (FIG. 12, reference numeral 1201). The input event can include one of various events such as a tap event, a drag and drop event, and a flick event generated by the user. If the input event is generated on the media object 1110, the portable terminal may output the disc object 155 of the media object 1110 as shown in FIG. 12 (reference numerals 1203 and 1205).

For instance, the portable terminal may provide a visual effect showing a disc object 155 being taken out of and separated from the media object 1110 according to a sliding-type method. The disc object 155 may then be moved to the execution area 400, as shown in FIG. 12 (reference number 1207).

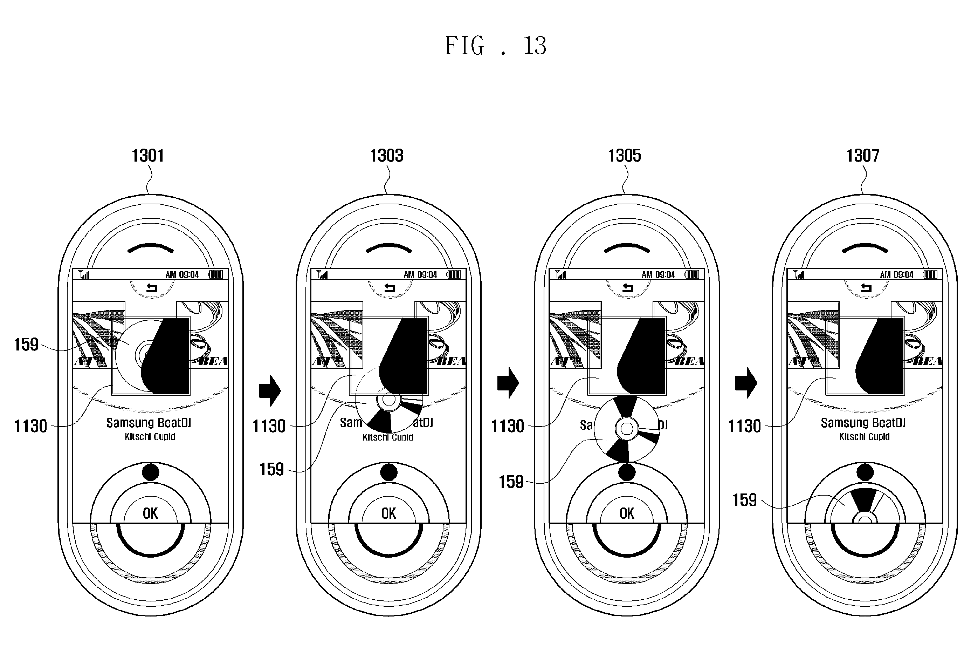

FIG. 13 shows an example of a portable terminal screen in which a multimedia item does not have image information. Accordingly, the media object 1130 may have a transparent case shape, and the disc object 159 may have a shape (e.g., a shadowed shape or a shape to which image information provided from the portable terminal is reflected) distinguished from the media object 1130.

The media object 1110 illustrated in FIG. 13 may have a transparent case shape to which some image information may not be reflected, but basic image information provided by the portable terminal may be reflected. Further, in FIG. 13, the disc object 159 can be distinguished from the media object 1130 by a shading of the disc object 159. In some cases, the media object 1130 can be implemented with a transparent case shape and the disc object 159 can be implemented by reflecting basic image information provided by the portable terminal.

In FIG. 13 (reference numeral 1301), the user can generate an input event by selecting the media object 1130 in the output area 300. The input event can include one of various events such as, for example, a tap event, a drag and drop event, and a flick event generated on the media object 1130. If the input event is generated on the media object 1130, the portable terminal may output the disc object 159 of the media object 1130, as shown in FIG 13 (reference numerals 1303 and 1305). For example, the portable terminal may generate a visual effect showing a disc object 159 being taken out and separated from the media object 1130 according to a sliding-type method. The portable terminal may then generate a visual effect showing that the disc object 159 is moved to the execution area 400, as shown in FIG. 13 (reference 1307).

Referring back to FIG. 10, if the portable terminal senses that a disc object is moved to the execution area 400, the portable terminal may rotate disc object in the execution area 400 while playing a multimedia item associated with the disc object (1023). For example, when a disc object is positioned in the execution area 400, the portable terminal may generate a visual effect showing the disc object rotating within the execution area 400 (FIG. 12, reference numeral 1207 and FIG. 13, reference numeral 1307) while playing a multimedia item associated with the disc object.

The multimedia item being played can include a single multimedia item (e.g., music file) or a multimedia item within a group (e.g., one music file within an album file). The portable terminal can rotate the disc object for a set period of time within the execution area 400. After the set period of time elapses, the portable terminal can remove the disc object from the execution area 400 (1025). The portable terminal can provide a visual effect showing the disk object as disappearing after the disc object is rotated in the execution area 400 for the set period of time. In some cases, step 1025 can be omitted, and the disc object may continually be rotated while the multimedia item associated with the disc object is being played. The portable terminal may then display a user interface related to the playback of a multimedia item when the disc object is being rotated or removed. For example, the portable terminal can display at least one object related to the playing of the multimedia item (1027).

When the input event detected at step 1005 of FIG. 10 does not correspond to an input event for a navigation input (step 1007) or for a media object selection (step 1013), the portable terminal can perform a corresponding operation according to the input event (1015). Step 1015 may correspond to step 215 of FIG. 2. Further, when moving the disc object of a media object selected in the output area 300 to the execution area 400, a contents list associated with the disc object can be displayed as described above with reference to FIG. 9A and FIG. 9B.

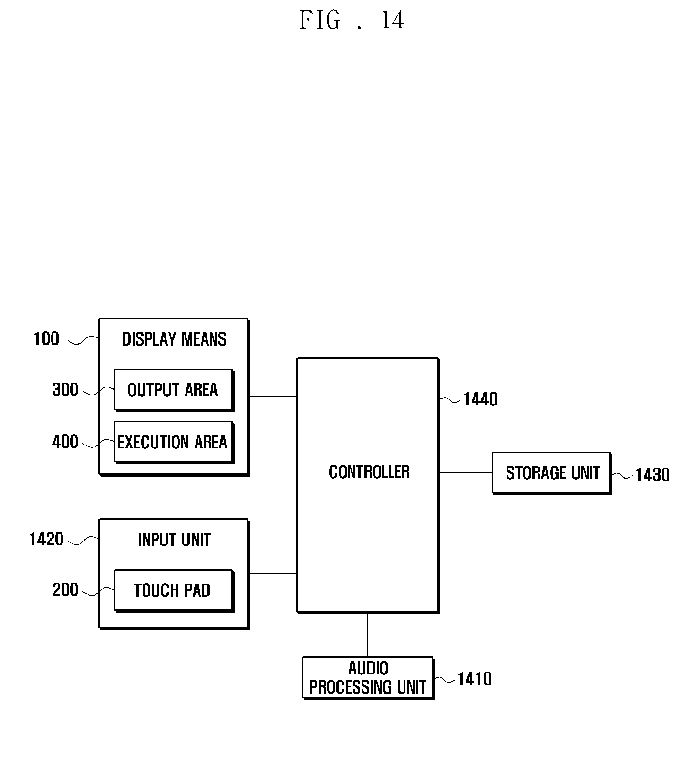

Hereinafter, the portable terminal may be described in more detail with reference to FIG. 14. The portable terminal may be any suitable type of mobile communications terminal, multimedia device, Portable Multimedia Player (PMP), digital broadcasting player, Personal Digital Assistant (PDA), Portable game terminal, Smart phone, as well as any portable terminal operating based on the communication protocols corresponding to various communications systems. A structure of a portable terminal is illustrated with reference to FIG. 14.

FIG. 14 is a block diagram illustrating a schematic configuration of a portable terminal according to exemplary embodiments of the present invention.

In FIG. 14, the display means 100, including an output area 300 and an execution area 400, may be a touch screen. However, the display means 100 may not be limited to a touch screen, and, in some cases, may be a liquid crystal display (LCD). The portable terminal may include an audio processing unit 1410, an input unit 1420, a display means 100, a storage unit 1430, and a controller 1440. The input unit 1420 may include a touch pad 200.

The audio processing unit 1410 can play various audio signals according to the user's selection. The audio processing unit 1410 may convert an audio signal sent from the controller 1440 to an analog signal and may output the analog signal through a speaker (SPK) (not shown).

The input unit 1420 may receive a user input (e.g., input event) and may send a signal corresponding to the input event to the controller 1440.The input unit 1420 may generate an input signal according to user behavior, and can include an input means such as a keypad and a touch pad 200. The input unit 1420 can receive the user input (e.g., input event). The touch pad 200 may provide an interface between the user and a portable terminal. The touch pad 200 may include a touch area for receiving the user input. If the touch pad 200 senses the user input (e.g., input event) in the touch area, the touch pad may send a signal corresponding to the input event to the controller 1440. The controller 1440 may execute a function according to the input event. In some cases, the input unit 1420 may only include the touch pad 200.

As noted above, the display means 100 may include the output area 300 and the execution area 400.If the display means 100 is implemented as a touch screen, the display means 100 can represent an input-output means which can simultaneously perform an input function and a display function. The display means 100 may display screen data generated while performing a function of portable terminal, and may display state information according to key manipulation and a function setting of the user. The display means 100 can display screen data related to the state and operation of the portable terminal.

The display means 100 may visually display different signals and color information outputted from the controller 1440. An input event may be input via the display means 100. For example, the tap event, the flick event, the sweep event, and the drag and drop event for function control may be input to the display means 100. The display means 100 may generate a signal according to the input event, as described above, and may send the generated signal to the controller 1440.

The output area 300 may display various types of objects and may receive an input event for user navigation through the objects. The output area 300 may display the disc-shaped disc object and/or the case-shaped media object according to a setting of the portable terminal. A disc object selected for playback may be moved from the output area 300 to the execution area 400. A multimedia item associated with the disc object may be played when the disk object is in the execution area 400. In the execution area 400, the GUI object for controlling the operation of the media object is displayed.

The GUI object can be provided with various types of virtual items, which may be changed according to the execution application. The execution area 400 may receive an input event for user navigation of the disc object or the media object in the output area 300 in connection with the touch pad 200. The touch pad 200 of the input unit 1420 and the display means 100 may be arranged adjacently, so that the touch region of the touch pad 200 and the execution area 400 of the display means 100 are adjacent to be connected organically.

The storage unit 1430 can include Read Only Memory (ROM) and/or Random Access Memory (RAM). The storage unit 1430 can store various data generated and used in the portable terminal. The data may include data generated according to the execution of applications of the portable terminal and all types of data generated while using the portable terminal or received externally (e.g., from another portable terminal or personal computer).

The data can include user interface data provided from the portable terminal, various setting information according to the usage of the portable terminal, GUI object set for each execution application, multimedia item, and various image information. Further, the storage unit 1430 can include one or more buffers which temporarily stores data generated when executing applications of the portable terminal.

The controller 1440 may control functions of the portable terminal and signal flow between each component (e.g., the audio processing unit 1410, the input unit 1420, the display means 100, and the storage unit 1430) of the portable terminal. The controller 1440 may control playback of a multimedia item. The controller 1440 may provide a disc-shaped disc object to the output area 300 or a case-shaped disc object according to a setting of the portable terminal.

The controller 1440 may control a visual appearance of the disc object and the media object by using image information of the multimedia item, or by using basic image information provided by the portable terminal. When the controller 1440 provides a case-shaped media object to the output area 300, the media object can reflect image information, or can be provided with a transparent case shape. When a transparent case shape is provided, the controller 1440 may provide a disc object within the media object, and can differentiate between the media object and the disc object.

The controller 1440 may control the conversion of the disc object or the media object displayed on the output area 300, and playback of the multimedia item associated with a disc object in the execution area 400. For example, if the controller 1440 senses that a disc object is positioned in the execution area 400, the controller 1440 may detect an execution signal of the multimedia item associated with the disc object, and controls playback of the multimedia item in response to the execution signal. Moreover, if an input event is sensed in one of the output area 300 and the execution area 400, the controller 1440 may process the user navigation, selection, or movement of the disc object provided to the output area 300, corresponding to the input event.

The controller 1440 may be implemented by software or hardware. If the portable terminal supports mobile communications services, the controller 1440 can include a baseband module for the mobile communications services of the portable terminal. When the portable terminal supports the mobile communications services, the portable terminal can include a wireless communications unit which forms a communications channel with a supportable mobile network and performs communications, such as, for example, voice call, video telephony call, and data call. Additionally, the audio processing unit 1410 can further perform the voice signal processing function according to the mobile communications services.

Moreover, although not shown, the portable terminal can further include a camera module to acquire image/video data, a digital broadcast reception module to receive and play digital broadcasting, a local communication module for local communication, and an internet communications module for communicating with an internet network and for performing internet functions. It should be understood that various other suitable components may be included in the portable terminal.

As described the above, in the embodiment of the present invention referring, it was representatively illustrated that the portable terminal includes a touch screen. However, the portable terminal of the present invention and its operation are not necessarily limited to the usage of the touch screen. Accordingly, it can be operated by the combination of the display unit configured of normal LCD and a key pad and/or a touch pad.That is, the portable terminal displays disc user interface classified into the output area and the execution area in response to user's request through the display unit, can control the navigation of the object (disc object or media object) provided to the output area through the manipulation of touch pad or keypad, and can control the movement of disc object to the execution area through the manipulation of touch pad or keypad. For example, the portable terminal can control the navigation between objects (disc object or media object) of the output area by the manipulation of navigation key of keypad, and can control a corresponding disc object to move to the execution area by an input of confirmation key, when a specific object to play is activated.

Moreover, in the embodiment of the present invention as illustrated in the above, it was representatively illustrated that a visual effect that disc object rotates in the execution area 400 is provided. However, the present invention is not limited to the operation described in the above. That is, using the application of the present invention as described above, it is obvious that visual effect that disc object rotates can be provided on the output area. For example, when the playing by a specific disc object is performed, a visual effect that other object other than a specific disc object provided to the output area is removed, and the specific disc object rotates in the output area can be provided.

Exemplary embodiments of the present invention can be applied to all types of electronic devices including devices having an input means for receiving user input. The input means can include various types of input means, such as, for example, a motion sensor which recognizes the motion of the user and generates a corresponding input signal, a touch pad or a touch screen which generates an input signal according to the contact and movement of a specific object (e.g., finger, stylus pen), and a voice recognition sensor which recognizes the voice of the user and generates a corresponding input signal.

Electronic devices having such an input means may include devices such as a portable terminal, a PDA, a mobile telecommunication terminal, a portable game terminal, and a PMP, and may include a display device such as, for example, a television (TV), a large format display (LFD), a digital signage (DS), and a media-pole. A display means in the electronic device may be, for example, a LCD, a Plasma Display Panel (PDP), and an Organic Light Emitting Diodes (OLED). The input means can be integrated in the electronic device, or provided as a separate apparatus attached to the electronic device.

The separate apparatus (i.e., input means) may be, for example, a gyro sensor, an acceleration sensor, an infrared light emitting device (IR LED), an image sensor, a touch pad, and a touch screen, and may recognize a motion of the electronic device or a pointing operation. In some cases, the separate apparatus can be implemented as a remote controller. The remote controller can include a keypad and can recognize a button input of the user. The remote controller can include a gyro sensor, an acceleration sensor, an IR LED, an image sensor, a touch pad and a touch screen, and can recognize a motion or a pointing operation of the remote control so that a control signal can be provided to the electronic device through wire/wireless communication.

As described above, a multimedia item can be played easily and intuitively using a user interface and a display means divided into an output area and an execution area. A media object and/or a disc object can be provided using image information of the multimedia item. When the user selects a multimedia item to play, the disc object may be taken out of the media object in the output area and moved to the execution area. Moreover, when the disc object is positioned in the execution area, a visual effect showing the disk object as rotating is provided. Accordingly, a multimedia item may be played as if an analog disc corresponding to the multimedia item is being played. Accordingly, an intuitive and sensitive user interface can be provided to the user.

Moreover, image information, like the image of an album file/music file that a multimedia item has or the image of a video file, may be provided by the multimedia item after converting the media object and disc object. That is, image information extracted from the multimedia item may be converted to a case-shaped and/or a disk-shaped media and subsequently provided. The user can perform playback of the multimedia item using the above-described methods, which are similar to the playing method of a disc off-line.

The above-described exemplary embodiments can be implemented in hardware or software or computer code that can be stored in a recording medium such as, for example, a CD ROM, a RAM, a floppy disk, a hard disk, or a magneto-optical disk, or may be downloaded over a network Methods described herein can be executed by such software using a general purpose computer, a processor, and/or a programmable hardware, such as an application specific integrated circuit (ASIC) or field-programmable gate array (FPGA). The computer, the processor, or the programmable hardware may include memory components (e.g., RAM, ROM, and Flash) that may store or receive software or computer code that when accessed and executed by the computer, processor, or hardware, implement the methods described herein.

It will be apparent to those skilled in the art that various modifications and variations can be made in the present invention without departing from the spirit or scope of the invention. Thus, it is intended that the present invention cover the modifications and variations of this invention provided they come within the scope of the appended claims and their equivalents.

## Claims

1. A multimedia item playing system, comprising:
an output area to display an object associated with a multimedia item; and
an execution area to receive the object moved from the output area, the multimedia item being played in response to the receiving.

2. The multimedia item playing system of claim 1, wherein the object is an object converted to a disc shape or a case shape by using image information provided by the multimedia item and/or image information provided by the multimedia item playing system.

3. The multimedia item playing system of claim 2, wherein the output area and the execution area are configured in a display means.

4. The multimedia item playing system of claim 2, wherein the object comprises a disc object corresponding to a disc-shape object or a media object corresponding to a case-shaped media object, the media object comprises a cover image, and an object having a transparent case shape, and an object having a disc shape.

5. The multimedia item playing system of claim 3, wherein the output area displays a plurality of objects and receives an input event for navigation between the displayed plurality of objects; and the execution area displays the object moved from the output area.

6. The multimedia item playing system of claim 5, wherein the execution area displays a visual effect corresponding to rotation of the object when the multimedia item is displayed, and displays a visual effect corresponding to disappearance of the rotating object from the execution area after a period of time elapses.

7. The multimedia item playing system of claim 3, further comprising: a controller to control a conversion of a plurality of objects displayed on the output area, and to control playback of the object in response to detecting that the object is in the execution area.

8. The multimedia item playing system of claim 7, wherein the controller generates the object by converting the object into a disc shape or a case shape using image information provided by the multimedia item and/or image information provided by the system, and to instruct a display unit to display the plurality of objects in the output area with an organic structure.

9. The multimedia item playing system of claim 8, wherein the controller moves the object to the execution area in response to user selection of the object in the output area, and controls playback of the multimedia item associated with the object.

10. The multimedia item playing system of claim 9, wherein the controller controls a rotation of the object in the execution area according to a setting in response to playback of the multimedia item, removes the rotating object from the execution area after a period of time elapses, and controls a display of the multimedia item being played.

11. The multimedia item playing system of claim 10, wherein the controller moves, to the execution area, the object from among a plurality of disc objects displayed in the output area or the object separated from a media object displayed in the output area.

12. A method of playing a multimedia item, the method comprising:
displaying an object in an output area in response to a request for playing a multimedia item associated with the object;
moving the object from the output area to an execution area; and
playing the object in response to moving the object to the execution area.

13. The method of claim 12, wherein moving the object comprises:
selecting the object from among a plurality of objects in the output area or the object having been separated from a media object displayed in the output area; and
moving the selected object to the execution area.

14. The method of claim 12, wherein playing the object comprises:
playing the multimedia item associated with the object;
rotating the object in the execution area when playing the multimedia item: and
removing the rotating object from the execution area after a period of time elapses.

15. The method of claim 14, further comprising:
displaying a contents list provided by the object when the object is positioned in the execution area; and
playing a multimedia item corresponding to a content listed in the contents list in response to selection of the content.
